# EUROPÄISCHE PATENTSCHRIFT

(11) **EP 4 332 717 B1**
(45) Veröffentlichungstag und Bekanntmachung des Hinweises auf die Patenterteilung: **28.05.2025**
(21) Anmeldenummer: 23192961.3
(22) Anmeldetag: 23.08.2023
(51) Int. Cl.: G05D 16/20

(54) **DRUCKREGELUNGSVORRICHTUNG**
PRESSURE REGULATING DEVICE
DISPOSITIF DE RÉGULATION DE PRESSION

(30) Priorität: 02.09.2022 DE 102022209115
(43) Veröffentlichungstag der Anmeldung: 06.03.2024
(73) Patentinhaber: thyssenkrupp Marine Systems GmbH, 24143 Kiel (DE); thyssenkrupp AG, 45143 Essen (DE)
(72) Erfinder: Krummrich, Stefan, 24634 Padenstedt (DE)
(74) Vertreter: thyssenkrupp Intellectual Property GmbH

(56) Entgegenhaltungen:
- EP-A2- 2 073 090
- GB-A- 865 457
- US-A- 3 060 951

## Beschreibung

Die Erfindung betrifft eine Druckregelungsvorrichtung mit einem Domdruckminderer für sehr präzise und zuverlässige Druckeinstellung.

Aus der DE 10 2019 210 220 A1 ist ein Verfahren zum Betreiben einer Brennstoffzellenvorrichtung mit einem Membranschaden bekannt. Um beispielsweise dieses Verfahren durchzuführen, ist es vorteilhaft, den Druck der zugeführten Gase besonders zuverlässig, präzise und stabil steuern zu können.

Aus der DE 10 2009 057 029 A1 ist eine Druckregelvorrichtung bekannt.

Aus der DE 103 05 780 A1 ist ein Unterseeboot bekannt.

Aus der DE 100 2019 213 991 A1 ist die Betankung eines Unterseebootes auf hoher See bekannt.

Aus der EP 2 073 090 A2 ist eine Gasventilanordnung bekannt.

Aus der US 0 060 951 A ist ein hydraulisches Regulationssystem bekannt.

Aus der GB 865 457 A ist ein druck- und temperatursensitives Ventil für eine Gefriereinheit bekannt.

Für die Druckregulierung von einer Brennstoffzellenvorrichtung zugeführten Gasen werden beispielsweise Domdruckminderer eingesetzt. Domdruckminderer weisen eine Membran zur Regelung des Durchflusses auf, wobei auf der dem zu regelnden Gas gegenüberliegenden Seite ein Regelgas verwendet wird, um mit dem Druck des Regelgases den Druck des zu regelnden Gases einzustellen.

Ein Nachteil des Domdruckminderers ist es, dass beispielsweise durch Schwankungen der Umgebungstemperatur der Druck des Regelgases sich ändert und damit der Druck des zu regelnden Gases. Um dieses Problem zu beheben, wurden aktive Domdruckminderer entwickelt, die eine Druckerfassungsvorrichtung an dem Gasauslass für das zu regelnde Gas aufweisen und eine aktive Zuführung und Abführung von Regelgas haben, um den Druck des zu regelnden Gases konstant zu halten. Jedoch hat auch diese Lösung technische Nachteile. Zum einen wird hierdurch ständig Regelgas verbraucht und an die Umgebung abgegeben. Was im Normalfall unkritisch erscheint, führt aber beim Einsatz in einem Unterseeboot zu einem Problem. Regelgas ist üblicherweise Stickstoff. Zum einem ist die in einem Unterseeboot vorhandene Menge an Regelgas begrenzt. Zum anderen wird das Regelgas in das Innere des Bootes abgegeben, was den Luftdruck für die Besatzung kontinuierlich erhöht und so auch zu einem Problem führt. Neben diesen praktischen Problemen kommt noch ein Sicherheitsproblem, insbesondere für die Druckminderung des Wasserstoffs. Auch die Membran in einem Domdruckminderer kann defekt werden. In diesem Fall tritt Wasserstoff auf die Regelgas-Seite und wird mit dem Regelgas ins Bootsinnere abgegeben. Durch die aktive Regelung kann dieses aber nicht bemerkt werden. Hierdurch kann es zu einer sehr gefährlichen Anreicherung von Wasserstoff im Inneren eines Unterseebootes kommen.

Es besteht also weiterhin der Bedarf nach einer Druckregelvorrichtung, welche eine sehr präzise und zuverlässige, aber auch sichere Druckregulierung beispielsweise für Wasserstoff und Sauerstoff für eine Brennstoffzellenvorrichtung an Bord ermöglicht.

Aufgabe der Erfindung ist es, eine Druckregelvorrichtung einzusetzen, welche auch beispielsweise in einem Unterseeboot ein Verfahren beispielsweise gemäß der DE 10 2019 210 220 A1 besonders zuverlässig auszuführen geeignet ist.

Gelöst wird diese Aufgabe durch die Druckregelungsvorrichtung mit den in Anspruch 1 angegebenen Merkmalen. Vorteilhafte Weiterbildungen ergeben sich aus den Unteransprüchen, der nachfolgenden Beschreibung sowie der Zeichnung.

Die erfindungsgemäße Druckregelungsvorrichtung ist insbesondere für ein Unterseeboot geeignet. Die erfindungsgemäße Druckregelungsvorrichtung weist einen ersten Domdruckminderer auf. Der erste Domdruckminderer weist eine erste Regelgasöffnung, einen ersten Gaseinlass und einen ersten Gasauslass auf. Durch den ersten Gaseinlass tritt das zu regelnde Gas ein, wird im ersten Domdruckminderer auf den geregelten Druck eingestellt und verlässt den ersten Domdruckminderer durch den ersten Gasauslass. Durch die erste Regelgasöffnung kann das Regelgas dem Dom zugeführt werden und der Druck im Dom eingestellt werden. So kann der Druck des Regelgases erhöht oder erniedrigt werden und so der Druck des zu regelnden Gases am ersten Gasauslass eingestellt werden. Der erste Gasauslass ist mit einer ersten Druckerfassungsvorrichtung verbunden. Bei einem Domdruckminderer erfolgt somit die Einstellung des für den zu regelnden Druck am Gasauslass durch das kontrollierte Anlegen eines Drucks an der Regelgasöffnung. Domdruckminderer sind aus dem Stand der Technik bekannt, für die erfindungsgemäße Druckregelungsvorrichtung kann ein herkömmlicher Domdruckminderer verwendet werden.

Erfindungsgemäß weist die Druckregelungsvorrichtung einen ersten Kolbenspeicher auf. Der erste Kolbenspeicher weist eine erste Gasseite und eine erste Fluidseite auf. Die erste Gasseite und die erste Fluidseite sind bevorzugt durch einen im Kolbenspeicher beweglichen Kolben getrennt, wobei der Kolben beispielsweise und bevorzugt wenigstens eine Dichtung aufweist. Der Kolben ist frei beweglich, sodass der Druck auf der ersten Gasseite und der ersten Fluidseite gleich sind (beziehungsweise im Falle einer Führungsstange des Kolbens im festen Verhältnis der druckbeaufschlagten Flächen des Kolbens stehen). Die erste Gasseite des ersten Kolbenspeichers ist gasführend mit der ersten Regelgasöffnung des ersten Domdruckminderers verbunden. Das Regelgas befindet sich somit in dem der ersten Regelgasöffnung angrenzenden Bereich des Domdruckminderes, in der ersten Gasseite des ersten Kolbenspeichers sowie in der Verbindung zwischen der ersten Regelgasöffnung und der ersten Gasseite des ersten Kolbenspeichers. Das Regelgas befindet sich somit in einem geschlossenen Raum. Der erste Kolbenspeicher weist somit zwei Öffnungen auf, eine erste Öffnung auf der ersten Gasseite, die mit der ersten Regelgasöffnung verbunden ist. Die zweite Öffnung ist auf der ersten Fluidseite angeordnet, um die Flüssigkeit aus der ersten Fluidseite zu entfernen oder in diese einzubringen. Da eine Flüssigkeit in erster Näherung nicht kompressibel ist, kann eine Druckveränderung des Regelgases nur durch eine Verschiebung des Kolbens und damit eine Volumenveränderung des Gesamtbereichs, in welchem sich das Regelgas befindet, erreicht werden, was wiederum nur durch die Änderung der Flüssigkeitsmenge in der ersten Fluidseite erreicht werden kann. Damit wird für die Regelung eben nur noch die Flüssigkeit gefördert, der wie bisher bei der Druckerniedrigung notwendige Gasablass und damit Verbrauch an Druckluft entfällt, was insbesondere in kleineren Vorrichtungen oder Vorrichtungen in begrenzter Umgebung, beispielsweise in einem Unterseeboot, sehr vorteilhaft ist.

Die erste Gasseite weist somit nur eine einzige Öffnung auf. Durch diese erste Öffnung ist die erste Gasseite mit der ersten Regelgasöffnung verbunden und bildet so ein abgeschlossenes Volumen für das Regelgas. Das Regelgas wird also bei den Schaltvorgängen insbesondere nicht an die Umgebung abgegeben und geht damit nicht verloren. Natürlich ist es vorteilhaft, wenn das abgeschlossene Volumen des Regelgases einen weiteren Zugang hat, um dieses beispielsweise erstmalig zu befüllen oder bei Wartungs- oder Reparaturarbeiten das Regelgas entfernen zu können. Ein solcher Wartungszugang ist im Betrieb jedoch geschlossen, sodass im Betrieb ein abgeschlossenes Volumen vorliegt, sodass ein solcher Wartungszugang eben keine Aufweitung des Begriffs des abgeschlossenen Volumens im Sinne der Erfindung darstellt.

Die erste Fluidseite weist somit ebenfalls eine Öffnung auf. Durch diese zweite Öffnung erfolgt eben die Zuführung oder Entfernung von Flüssigkeit, was wiederum die einzige Möglichkeit zur Änderung des Drucks des Regelgases in der ersten Gasseite und damit im ersten Domdruckminderer darstellt.

Die Verwendung des erfindungsgemäßen ersten Kolbenspeichers hat zwei Vorteile. Zum einen befindet sich das Regelgas in einem begrenzten und abgeschlossenen Volumen im Domdruckminderer, der ersten Gasseite des ersten Kolbenspeichers und der Verbindung dazwischen. Domdruckminderer, erste Gasseite und die Verbindung dazwischen bilden somit ein abgeschlossenen Gasraum. Sollte also beispielsweise Wasserstoff als zu regelndes Gas bei einem Membranschaden in dem Domdruckminderer in das Regelgas gelangen können, so verbleibt der Wasserstoff in diesem abgeschlossenen Volumen. Zum anderen erfolgt die Einstellung und Anpassung des Regeldruckes über die Zuführung und Abführung von Flüssigkeit auf der Fluidseite. Der Kolbenspeicher kann dabei so ausgeführt sein, dass er auf Druckschwankungen auf einer der beiden Seiten nur langsam reagiert. Dadurch oder andere Maßnahmen werden im Vergleich zur direkten Zuführung von Regelgas zu einem Domdruckminderer Überschwinger oder Schwingungen des Drucks beim Regelgas deutlich reduziert, was wiederum zu einem konstanteren Druck am ersten Gasauslass führt. Die erfindungsgemäße Druckregelvorrichtung ist dadurch insbesondere zum Einsatz an Bord eines Unterseebootes und auch für den Einsatz an einer Brennstoffzellenvorrichtung mit einem Membranschaden geeignet. Letzteres erhöht die Sicherheit für ein Unterseeboot weiter, weil selbst beim Auftreten eines Schadens weiter Energie, beispielsweise für ein Auftauchen zur Verfügung gestellt werden kann.

Die Fluidseite führt bevorzugt eine Flüssigkeit, die nicht oder schwer kompressibel ist. Insbesondere kann dieses Wasser oder Hydrauliköl sein. Es kann aber auch vorgesehen sein, dass das Fluid der Fluidseite ein Gas ist, wie zum Beispiel Druckluft, Stickstoff oder ein Edelgas, wie zum Beispiel Argon.

In einer weiteren Ausführungsform der Erfindung weist die Druckregelungsvorrichtung eine Steuereinheit auf. Die Steuereinheit ist mit einer ersten Druckerfassungsvorrichtung zur Weiterleitung des erfassten Drucks verbunden. Die erste Druckerfassungsvorrichtung erfasst den Druck des zu regelnden Gases hinter dem ersten Gasauslass, also den Druck, der anschließend, beispielsweise einer Brennstoffzellenvorrichtung, zur Verfügung gestellt wird. Damit kann die Steuereinheit den real anliegenden Druck mit einem vorgegebenen Druck vergleichen und den ersten Domdruckminderer gegebenenfalls nachregulieren. Bevorzugt ist die Steuereinheit daher dazu ausgebildet, durch Zuführen ober Entfernen von Flüssigkeit aus der ersten Fluidseite desersten Kolbenspeichers nachzuregulieren.

In einer weiteren Ausführungsform der Erfindung ist die erste Fluidseite des ersten Kolbenspeichers mit einer ersten Pumpe verbunden. Wird eine dicht schließende erste Pumpe verwendet, so kann diese direkt eine Flüssigkeit in die erste Fluidseite des ersten Kolbenspeichers hinein oder aus dieser heraus gefördert werden. Diese direkte Bauweise ist bevorzugt, wenn die Druckregelungsvorrichtung nur einen einzigen Domdruckminderer aufweist. Weist die Druckregelungsvorrichtung mehrere Domdruckminderer auf, so ist eine indirekte Verbindung bevorzugt, wie weiter unten ausgeführt.

In einer weiteren Ausführungsform der Erfindung ist die erste Fluidseite des ersten Kolbenspeichers flüssigkeitsgefüllt.

In einer weiteren Ausführungsform der Erfindung weist der erste Kolbenspeicher eine erste Kolbenpositionserfassungsvorrichtung auf. Die erste Kolbenpositionserfassungsvorrichtung ist zur Erfassung der Position des ersten Kolbens im ersten Kolbenspeichers ausgebildet. Die Kolbenpositionserfassungsvorrichtung ist für die eigentliche Druckregelung nicht notwendig, für die Sicherheit der Druckregelungsvorrichtung jedoch vorteilhaft. Weist die Membran des Domdruckminderes einen Defekt auf, derart, dass Regelgas austritt oder das zu regelnde Gas in das Regelgas eintritt, so ist dieses über die Position des Kolbens feststellbar. Dieses ist besonders gut möglich, wenn zwei oder mehr Kolbenspeicher und Domdruckminderer vorhanden sind. Ist in allen Kolbenspeichern eine parallele Veränderung des Kolbens zu beobachten, so ist diese vermutlich auf eine Umgebungsbedingung, insbesondere Temperatur zurückzuführen. Ändert sich jedoch nur in einem Kolbenspeicher die Kolbenposition, so ist dieses ein deutlicher Hinweis darauf, dass die Membran des mit diesem Kolbenspeicher verbundenen Domdruckminderers defekt ist.

In einer weiteren Ausführungsform der Erfindung ist die erste Kolbenpositionserfassungsvorrichtung als Laufzeitmessung auf der ersten Gasseite ausgebildet. Bevorzugt wird hierzu Licht, Schall oder Radar verwendet, besonders bevorzugt Schall. Dieses ermöglicht eine einfache, kompakte und berührungslose Integration.

In einer weiteren Ausführungsform der Erfindung ist die erste Fluidseite des ersten Kolbenspeichers mit einem Flüssigkeitskreislauf verbunden. Der Flüssigkeitskreislauf weist einen Flüssigkeitsspeicher, eine erste Pumpe und einen Flüssigkeitsdruckspeicher auf. Die erste Pumpe ist derart angeordnet, dass sie von Flüssigkeit aus dem Flüssigkeitsspeicher in den Flüssigkeitsdruckspeicher fördert. Der Flüssigkeitsdruckspeicher ist über eine erste erste Verbindung mit der ersten Fluidseite des ersten Kolbenspeichers verbunden. Die erste erste Verbindung weist ein erstes erstes Ventil auf. Die erste Fluidseite des ersten Kolbenspeichers ist über eine zweite erste Verbindung mit dem Flüssigkeitsspeicher verbunden. Die zweite erste Verbindung weist ein zweites erstes Ventil auf. Diese erhöhte Komplexität ist besonders bevorzugt, wenn zwei oder mehr Kolbenspeicher und Domdruckminderer angesteuert werden sollen. Darüber hinaus ist es vorteilhaft, da durch die Ventile eine sehr schnelle und sehr einfache Anpassung erfolgen kann. Insbesondere kann dadurch ein Laufen der Pumpe auf Zeiten beschränkt werden, in denen eine Geräuschentwicklung nicht nachteilig ist, was wiederum vorteilhaft für die akustische Signatur eines Unterseebootes ist.

In einer weiteren Ausführungsform der Erfindung ist der Flüssigkeitsdruckspeicher mit einem Druckgasspeicher verbunden. Hierdurch muss der Druck nicht durch die erste Pumpe erzeugt werden, sondern wird durch den Druckgasspeicher aufgeprägt. Insbesondere kann dadurch der Druck auch unabhängig vom Füllstand des Flüssigkeitsdruckspeichers gehalten werden. Wäre der Flüssigkeitsdruckspeicher geschlossen, so würde die erste Pumpe den Druck erzeugen und der Druck wäre direkt vom Füllstand und somit vom durch das dem Gas im Flüssigkeitsdruckspeicher zur Verfügung stehende Volumen, welches nicht von der Flüssigkeit eingenommen wird, abhängig und somit stark schwankend.

In einer weiteren Ausführungsform der Erfindung ist der Innendurchmesser der ersten ersten Verbindung um wenigstens Faktor 10, bevorzugt um wenigstens Faktor 100, kleiner als der Innendurchmesser des ersten Kolbenspeichers. Durch diesen kleinen Innendurchmesser ist die Zuflussgeschwindigkeit an Flüssigkeit limitiert und somit die Bewegung des Kolbens aufgrund des größeren Innendurchmessers reduziert, sodass die Veränderung des Druckes des Regelgases auf der ersten Gasseite nicht schlagartig erfolgt, wie dieses beispielsweise bei der direkten Zuführung von Regelgas aus einem Druckgasspeicher der Fall sein kann. Hierdurch werden Überschwinger beim Regelungsvorgang vermieden, was wiederum den Druck an dem ersten Gasauslass vergleichmäßigt.

In einer weiteren Ausführungsform der Erfindung ist der Innendurchmesser der zweiten ersten Verbindung um wenigstens Faktor 10, bevorzugt um wenigstens Faktor 100, kleiner als der Innendurchmesser des ersten Kolbenspeichers. Durch diesen kleinen Innendurchmesser ist die Abflussgeschwindigkeit an Flüssigkeit limitiert und somit die Bewegung des Kolbens aufgrund des größeren Innendurchmessers reduziert, sodass die Veränderung des Druckes des Regelgases auf der ersten Gasseite nicht schlagartig erfolgt, wie dieses beispielsweise direkten Ablass von Regelgas an die Umgebung der Fall sein kann. Hierdurch werden Überschwinger beim Regelungsvorgang vermieden, was wiederum den Druck an dem ersten Gasauslass vergleichmäßigt.

In einer weiteren Ausführungsform der Erfindung ist der Flüssigkeitsdruckspeicher mit einer Flüssigkeits-Druckerfassungsvorrichtung verbunden.

In einer weiteren Ausführungsform der Erfindung weist die Druckregelungsvorrichtung einen zweiten Domdruckminderer auf. Der zweite Domdruckminderer weist eine zweite Regelgasöffnung, einen zweiten Gaseinlass und einen zweiten Gasauslass auf. Der zweite Gasauslass ist mit einer zweiten Druckerfassungsvorrichtung verbunden. Die Druckregelungsvorrichtung weist einen zweiten Kolbenspeicher auf. Der zweite Kolbenspeicher weist eine zweite Gasseite und eine zweite Fluidseite auf. Die zweite Gasseite des zweiten Kolbenspeichers ist gasführend mit der zweiten Regelgasöffnung des zweiten Domdruckminderers verbunden.

Beispielsweise und insbesondere dient der erste Domdruckminderer zur Druckregulierung von Wasserstoff für eine Brennstoffzellenvorrichtung und der zweite Domdruckminderer zur Druckregulierung von Sauerstoff für die gleiche Brennstoffzellenvorrichtung.

Die weiteren Ausführungsformen zum ersten Kolbenspeicher wie oben beschrieben gelten analog auch für den zweiten Kolbenspeicher. Bevorzugt sind der erste Kolbenspeicher und der zweite Kolbenspeicher gleichartig ausgebildet.

In einer weiteren Ausführungsform der Erfindung ist der Flüssigkeitsdruckspeicher über eine erste zweite Verbindung mit der zweiten Fluidseite des zweiten Kolbenspeichers verbunden. Die erste zweite Verbindung weist ein erstes zweites Ventil auf. Die zweite Fluidseite des zweiten Kolbenspeichers ist über eine zweite zweite Verbindung mit dem Flüssigkeitsspeicher verbunden. Die zweite zweite Verbindung weist ein zweites zweites Ventil auf. Bei zwei Domdruckminderen ist die Nutzung eines gemeinsamen Flüssigkeitskreislaufes vorteilhaft. Zum einen wird beispielsweise nur eine Pumpe benötigt, zum anderen kann über die zusätzlichen Ventile eine sehr einfache, schnelle und zuverlässige Druckanpassung erfolgen. Je mehr Domdruckminderer vorhanden sind, umso mehr skaliert dieser Effekt.

In einer weiteren Ausführungsform der Erfindung weist die Druckregelungsvorrichtung einen dritten Domdruckminderer auf. Der dritte Domdruckminderer weist eine dritte Regelgasöffnung, einen dritten Gaseinlass und einen dritten Gasauslass auf. Der dritte Gasauslass ist mit einer dritten Druckerfassungsvorrichtung verbunden. Die Druckregelungsvorrichtung weist einen dritten Kolbenspeicher auf. Der dritte Kolbenspeicher weist eine dritte Gasseite und eine dritte Fluidseite auf. Die dritte Gasseite des dritten Kolbenspeichers ist gasführend mit der dritten Regelgasöffnung des dritten Domdruckminderers verbunden.

Beispielsweise und insbesondere dient der erste Domdruckminderer zur Druckregulierung von Wasserstoff für eine Brennstoffzellenvorrichtung, der zweite Domdruckminderer zur Druckregulierung von Sauerstoff für die gleiche Brennstoffzellenvorrichtung und der dritte Domdruckminderer zur Druckregulierung eines Inertgases, beispielsweise Stickstoff, für die gleiche Brennstoffzellenvorrichtung.

Die weiteren Ausführungsformen zum ersten Kolbenspeicher wie oben beschrieben gelten analog auch für den dritten Kolbenspeicher. Bevorzugt sind der erste Kolbenspeicher, der zweite Kolbenspeicher und der dritte Kolbenspeicher gleichartig ausgebildet.

In einer weiteren Ausführungsform der Erfindung ist der Flüssigkeitsdruckspeicher über eine erste dritte Verbindung mit der dritten Fluidseite des dritten Kolbenspeichers verbunden. Die erste dritte Verbindung weist ein erstes drittes Ventil auf. Die dritte Fluidseite des dritten Kolbenspeichers ist über eine zweite dritte Verbindung mit dem Flüssigkeitsspeicher verbunden. Die zweite dritte Verbindung weist ein zweites drittes Ventil auf.

In einer weiteren Ausführungsform der Erfindung sind die Ventile Magnetventile. Magnetventile erlauben eine besonders schnelle und präzise Regelung und sind insbesondere auch für die Automatisierung sehr gut geeignet.

In einer weiteren Ausführungsform der Erfindung weist die Druckregelungsvorrichtung eine Steuereinheit auf. Die Steuereinheit ist mit der jeder Druckerfassungsvorrichtung und jedem Ventil verbunden. Beispielsweise wird aufgrund des von der ersten Druckerfassungsvorrichtung erfassten Drucks in Abhängigkeit eines ersten vorgegebenen Druckes durch die Steuereinheit ermittelt, ob das erste erste Ventil oder das zweite erste Ventil geöffnet (oder später geschlossen) werden muss, um den ersten vorgegebenen Druck zu erreichen. Analog wird aufgrund des von der zweiten Druckerfassungsvorrichtung erfassten Drucks in Abhängigkeit eines zweiten vorgegebenen Druckes durch die Steuereinheit ermittelt, ob das erste zweite Ventil oder das zweite zweite Ventil geöffnet (oder später geschlossen) werden muss, um den zweiten vorgegebenen Druck zu erreichen. Weiter kann mit einer Flüssigkeits-Druckerfassungsvorrichtung der Druck im Flüssigkeitsdruckspeicher verfolgt werden und beispielsweise durch die erste Pumpe, durch Zuleiten von Gas aus einem Druckgasspeicher oder durch Ablassen von Fas an die Umgebung (beispielsweise während oder nach dem Laufen der ersten Pumpe) wieder auf einen Vorgabewert eingestellt werden.

In einer weiteren Ausführungsform der Erfindung ist die Steuereinheit mit der ersten Pumpe verbunden. Insbesondere kann die Steuereinheit die erste Pumpe ein- und ausschalten.

In einer weiteren Ausführungsform der Erfindung ist die Flüssigkeit Wasser. Anstelle von Wasser können natürlich auch andere Hydraulikflüssigkeiten eingesetzt werden. Insbesondere Öle können Vorteile zum Beispiel im Bereich Korrosion und Schmiereigenschaften im Kolbenspeicher haben. Auf der anderen Seite ist hat Wasser keine Wechselwirkung mit Sauerstoff, sollte eine Membran in einem Domdruckminderer undicht werden, in welchem Sauerstoff das zu regelnde Gas ist.

In einem weiteren Aspekt betrifft die Erfindung ein Unterseeboot mit einer erfindungsgemäßen Druckregelungsvorrichtung. Die erfindungsgemäße Druckregelungsvorrichtung ist insbesondere für den vergleichsweise kritischen Einsatz in einem Unterseeboot besonders gut geeignet. Somit zeichnet sich ein Unterseeboot mit einer erfindungsgemäßen Druckregelungsvorrichtung durch eine besonders hohe Sicherheit für die Besatzung aus.

In einer weiteren Ausführungsform der Erfindung weist das Unterseeboot eine Brennstoffzellenvorrichtung auf. Der erste Gasauslass ist mit der Brennstoffzellenvorrichtung verbunden. Bevorzugt ist auch der zweite Gasauslass mit der Brennstoffzellenvorrichtung verbunden. Weiter bevorzugt ist auch der dritte Gasauslass mit der Brennstoffzellenvorrichtung verbunden. So können insbesondere Wasserstoff, Sauerstoff und Inertgas für die Brennstoffzellenvorrichtung in besonders kontrollierter Weise zur Verfügung gestellt werden, was wiederum die Membranlebensdauer der Brennstoffzellenmembran erhöht und zusätzlich auch ein Betreiben bei einer defekten Brennstoffzellenmembran vereinfacht. Insbesondere sei hier auf das Verfahren verwiesen, welches in der DE 10 2019 210 220 A1 offenbart ist.

In einer weiteren Ausführungsform der Erfindung weist das Unterseeboot ein Reaktionswassertank für das in der Brennstoffzellenvorrichtung erzeugte Wasser auf. Der Reaktionswassertank bildet den Flüssigkeitsspeicher. Hierdurch kann ein bereits bestehendes Bauteil verwendet werden, was die Druckregelungsvorrichtung sehr kompakt macht.

In einer weiteren Ausführungsform der Erfindung weist das Unterseeboot ein Kühlwassersystem auf. Das Kühlwassersystem kann dabei beispielsweise und bevorzugt zur Kühlung einer Brennstoffzellenvorrichtung verwendet werden. Das Kühlwassersystem weist einen Druckausgleichsbehälter auf. Dieser ist üblich und dient dazu, den Druck im Kühlwassersystem möglichst konstant zu halten. Üblicherweise ist der Druckausgleichsbehälter geschlossen und kann selber, beispielsweise durch Änderung der Umgebungstemperatur und damit des Gasdrucks im Inneren zu Druckschwankungen im Kühlwassersystem führen. Die Druckregelungsvorrichtung weist einen vierten Kolbenspeicher auf. Der vierte Kolbenspeicher weist eine vierte Gasseite und eine vierte Fluidseite auf. Die vierte Gasseite des vierten Kolbenspeichers ist gasführend mit dem Druckausgleichsbehälter verbunden. Dadurch kann in einfacher und synergistischer Weise auch der Druck im Kühlwassersystem konstant gehalten werden.

In einer weiteren Ausführungsform der Erfindung weist die Druckregelungsvorrichtung einen ersten Ersatzkolbenspeicher auf. Der erste Ausführungsform weist eine erste Ersatzgasseite und eine erste Ersatzfluidseite auf. Die erste Ersatzgasseite und die erste Ersatzfluidseite sind bevorzugt durch einen im Ersatzkolbenspeicher beweglichen Ersatzkolben getrennt, wobei der Ersatzkolben beispielsweise und bevorzugt wenigstens eine Dichtung aufweist. Die erste Ersatzgasseite des ersten Kolbenspeichers ist gasführend und mit einem Ersatzventil mit der ersten Regelgasöffnung des ersten Domdruckminderers verbunden. Fällt der erste Kolbenspeicher aus, so kann das Ersatzventil geöffnet werden und der erste Ersatzkolbenspeicher kann die Aufgabe des ersten Kolbenspeichers übernehmen. Weist die Druckregelungsvorrichtung mehrere Kolbenspeicher und mehrere Domdruckminderer auf, so ist in einer Ausführungsform der erste Ersatzkolbenspeicher jeweils über ein Ersatzventil mit jedem Domdruckminderer verbunden. Fällt ein beliebiger Kolbenspeicher aus, so wird das entsprechende Ersatzventil geöffnet und der erste Ersatzkolbenspeicher kann dessen Aufgabe übernehmen. Auf diese Weise wird nur ein Ersatzkolbenspeicher benötigt.

In einem weiteren Aspekt betrifft die Erfindung ein Verfahren zur Erkennung eines Defekts einer Membran in einem Domdruckminderer. Hierzu weist der erste Kolbenspeicher eine erste Kolbenpositionserfassungsvorrichtung auf. Die erste Kolbenpositionserfassungsvorrichtung ist zur Erfassung der Position des ersten Kolbens im ersten Kolbenspeichers ausgebildet. Die Kolbenpositionserfassungsvorrichtung ist für die eigentliche Druckregelung nicht notwendig, für die Sicherheit der Druckregelungsvorrichtung jedoch vorteilhaft. Weist die Membran des Domdruckminderes einen Defekt auf, so wird dieses über die Position des Kolbens festgestellt. Dieses ist besonders gut möglich, wenn zwei oder mehr Kolbenspeicher und Domdruckminderer vorhanden sind. Wird in allen Kolbenspeichern eine parallele Veränderung des Kolbens zu beobachtet, so wird diese vermutlich auf eine Umgebungsbedingung, insbesondere Temperatur zurückgeführt. Ändert sich jedoch nur in einem Kolbenspeicher die Kolbenposition, so wird daraus geschlossen, dass die Membran des mit diesem Kolbenspeicher verbundenen Domdruckminderers defekt ist.

In einer weiteren Ausführungsform der Erfindung wird ein erster Grenzwert für die Position des ersten Kolbens im ersten Kolbenspeichers definiert wird. Bei Erreichen oder Überschreiten des ersten Grenzwertes wird Regelgas in die Verbindung zwischen der ersten Regelgasöffnung und der ersten Gasseite des ersten Kolbenspeichers eingebracht. Der erste Grenzwert ist bevorzugt für ein sehr kleines bis nicht mehr vorhandenes Restvolumen der ersten Gasseite des ersten Kolbenspeichers definiert. Im Falle einer Leckage der Verbindung zwischen der ersten Regelgasöffnung und der ersten Gasseite des ersten Kolbenspeichers kann somit wenigstens temporär gegengesteuert werden.

In einer weiteren Ausführungsform der Erfindung wird ein zweiter Grenzwert für die Position des ersten Kolbens im ersten Kolbenspeichers definiert wird. Bei Erreichen oder Überschreiten des zweiten Grenzwertes wird Regelgas aus der Verbindung zwischen der ersten Regelgasöffnung und der ersten Gasseite des ersten Kolbenspeichers entnommen. Der zweite Grenzwert ist bevorzugt für ein sehr kleines bis nicht mehr vorhandenes Restvolumen der ersten Fluidseite des ersten Kolbenspeichers definiert. Im Falle einer Leckage der Membran im Domdruckminderer kann somit wenigstens temporär gegengesteuert werden.

In einer weiteren Ausführungsform der Erfindung enthält das Regelgas ein Detektionsgas. Ein Detektionsgas ist ein Gas, das sich normalerweise nicht in der Umgebung des Domdruckminderers befindet oder Bestandteil der zu regelnden Gase ist. Das Detektionsgas ist dabei vorzugsweise ungiftig und nicht reaktiv. Ein solches Gas kann beispielsweise, Helium, insbesondere ³He, Wasserstoff oder ein anders Edelgas sein. Alternativ kann das Detektionsgas eine einen starken Geruch erzeugende Komponente sein, wie diese beispielsweise Erdgas zur menschlichen Erkennung von Leckagen zugesetzt wird. Des Weiteren kann in der Umgebung des Domdrucksensors oder am Ausgang des Domdruckminderers ein Sensor angeordnet sein, der geeignet ist, das Regelgas, insbesondere das im Regelgas enthaltene Detektionsgas, zu detektieren. Nachfolgend ist die erfindungsgemäße Druckregelungsvorrichtung anhand eines in der Zeichnung dargestellten Ausführungsbeispiels näher erläutert.

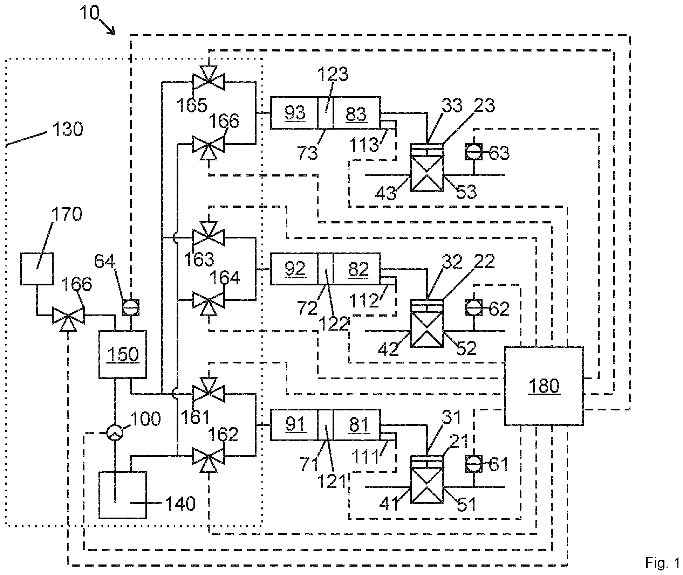

### Fig. 1 Druckregelungsvorrichtung

Durchgezogene Verbindungslinien zeigen fluidführende Verbindungen (Gas oder Flüssigkeit. Gestrichelte Verbindungslinien zeigen steuer- und regelungstechnische Verbindungen und sind beispielsweise und bevorzugt als elektronische Verbindungen ausgeführt.

**In** Fig. 1 in eine beispielhafte Druckregelungsvorrichtung für drei zu regelnde Gase, beispielsweise Wasserstoff, Sauerstoff und Stickstoff für eine Brennstoffzellenvorrichtung, gezeigt. Beispielsweise wird Wasserstoff durch den ersten Domdruckminderer21 geregelt, Sauerstoff durch den zweiten Domdruckminderer 22 und Stickstoff durch den dritten Domdruckminderer 23.

Der Wasserstoff wird durch den ersten Gaseinlass 41 zugeführt, der Druck des Wasserstoffs wird im ersten Domdruckminderer 21 über den Regelgasdruck eingestellt. Das Regelgas wird durch die erste Regelgasöffnung 31 zu- und abgeführt. Anschließend verlässt der Wasserstoff den ersten Domdruckminderer 21 über den ersten Gasauslass 51. Der eingestellte Druck des Wasserstoffs wird mit der ersten Druckerfassungsvorrichtung 61 gemessen und an die Steuereinheit 180 geleitet.

Der Sauerstoff wird durch den zweiten Gaseinlass 42 zugeführt, der Druck des Sauerstoffs wird im zweiten Domdruckminderer 22 über den Regelgasdruck eingestellt. Das Regelgas wird durch die zweite Regelgasöffnung 32 zu- und abgeführt. Anschließend verlässt der Sauerstoff den zweiten Domdruckminderer 22 über den zweiten Gasauslass 52. Der eingestellte Druck des Sauerstoffs wird mit der zweiten Druckerfassungsvorrichtung 62 gemessen und an die Steuereinheit 180 geleitet.

Der Stickstoff wird durch den dritten Gaseinlass 43 zugeführt, der Druck des Stickstoffs wird im dritten Domdruckminderer 23 über den Regelgasdruck eingestellt. Das Regelgas wird durch die dritte Regelgasöffnung 33 zu- und abgeführt. Anschließend verlässt der Stickstoff den dritten Domdruckminderer 23 über den dritten Gasauslass 53. Der eingestellte Druck des Stickstoffs wird mit der dritten Druckerfassungsvorrichtung 63 gemessen und an die Steuereinheit 180 geleitet.

Das Regelgas wird nun nicht direkt geregelt, um die oben genannten Probleme zu vermeiden. Vielmehr ist das Regelgas nur in einem geschlossenen Volumen vorhanden und wird über die Kolbenspeicher 71, 72, 73 eingestellt.

Zur Regulierung des ersten Domdruckminderers 21 ist dieser mit einem ersten Kolbenspeicher 71 verbunden und zwar mit der ersten Gasseite 81 des ersten Kolbenspeichers 71. Im ersten Kolbenspeicher 71 trennt ein erster Kolben 121 die erste Gasseite 81 von der ersten Fluidseite 91. Durch Zuführen und Abführen von Flüssigkeit zur ersten Fluidseite 91 kann nun in sicherer und zuverlässiger Weise der Regelgasdruck im ersten Domdruckminderer 21 eingestellt und damit der Wasserstoffdruck an der erste Druckerfassungsvorrichtung 61 präzise und zuverlässig eingestellt werden.

Zur Regulierung des zweiten Domdruckminderers 22 ist dieser mit einem zweiten Kolbenspeicher 72 verbunden und zwar mit der zweiten Gasseite 82 des zweiten Kolbenspeichers 72. Im zweiten Kolbenspeicher 72 trennt ein zweite Kolben 122 die zweite Gasseite 82 von der zweiten Fluidseite 92. Durch Zuführen und Abführen von Flüssigkeit zur zweiten Fluidseite 92 kann nun in sicherer und zuverlässiger Weise der Regelgasdruck im zweiten Domdruckminderer 22 eingestellt und damit der Sauerstoffdruck an der zweiten Druckerfassungsvorrichtung 62 präzise und zuverlässig eingestellt werden.

Zur Regulierung des dritten Domdruckminderers 23 ist dieser mit einem dritten Kolbenspeicher 73 verbunden und zwar mit der dritten Gasseite 83 des dritten Kolbenspeichers 73. Im dritten Kolbenspeicher 73 trennt ein dritter Kolben 123 die dritte Gasseite 83 von der dritten Fluidseite 93. Durch Zuführen und Abführen von Flüssigkeit zur dritten Fluidseite 93 kann nun in sicherer und zuverlässiger Weise der Regelgasdruck im dritten Domdruckminderer 23 eingestellt und damit der Stickstoffdruck an der dritten Druckerfassungsvorrichtung 63 präzise und zuverlässig eingestellt werden.

Um einen Membranschaden in einem Domdruckminderer 21, 22, 23 feststellen zu können, weisen die Kolbenspeicher 71, 72, 73 Kolbenpositionserfassungsvorrichtung 111, 112, 113 auf. Der erste Kolbenspeicher 71 weist eine erste Kolbenpositionserfassungsvorrichtung 111 auf, welche an der ersten Gasseite 81 angeordnet ist und erfasst somit die Position des ersten Kolbens 121. Die erste Kolbenpositionserfassungsvorrichtung 111 ist mit der Steuereinheit 180 verbunden. Der zweite Kolbenspeicher 72 weist eine zweite Kolbenpositionserfassungsvorrichtung 112 auf, welche an der zweiten Gasseite 82 angeordnet ist und erfasst somit die Position des zweiten Kolbens 122. Die zweite Kolbenpositionserfassungsvorrichtung 112 ist mit der Steuereinheit 180 verbunden. Der dritte Kolbenspeicher 73 weist eine dritte Kolbenpositionserfassungsvorrichtung 113 auf, welche an der dritten Gasseite 83 angeordnet ist und erfasst somit die Position des dritten Kolbens 123. Die dritte Kolbenpositionserfassungsvorrichtung 113 ist mit der Steuereinheit 180 verbunden. Verändern alle drei Kolben 121, 122, 123 die Position in vergleichbarer Weise, so ist dieses ein Hinweis auf beispielsweise geänderte Umgebungsbedingungen, insbesondere Temperatur. Ändert nur ein Kolben 121, 122, 123 seine Position, so ist dieses ein Hinweis darauf, dass die Membran des mit dem Kolbenspeichers 71, 72, 73 des betreffenden Kolbens 121, 122, 123 verbundenen Domdruckminderers 21, 22, 23 defekt ist. Es kann jedoch auch andere Gründe geben, beispielsweise, wenn durch einen der Domdruckminderer beispielsweise Sauerstoff aus einem Flüssigsauerstofftank strömt, und durch eine starke Veränderung der Durchströmung es zu einer starken Temperaturänderung kommt. Dieses ergibt sich dann jedoch aus dem Gesamtzusammenhang. Erreicht nur ein Kolben 121, 122, 123 eine Endposition, so ist dieses ein deutlicher Hinweis darauf, dass die Membran des mit dem Kolbenspeichers 71, 72, 73 des betreffenden Kolbens 121, 122, 123 verbundenen Domdruckminderers 21, 22, 23 defekt ist oder eine andere Undichtigkeit vorliegt.

Zur einfachen Regelung weist die Druckregelungsvorrichtung 10 einen Flüssigkeitskreislauf 130 auf. Der Flüssigkeitskreislauf 130 weist zunächst einen Flüssigkeitsspeicher 140 auf, in dem die Flüssigkeit bevorzugt drucklos (auf Umgebungsdruck) ist. Vom Flüssigkeitsspeicher 140 fördert eine erste Pumpe 100 die Flüssigkeit, die bevorzugt Wasser ist, in einen Flüssigkeitsdruckspeicher 150. Bevorzugt wird der Druck im Flüssigkeitsdruckspeicher 150 mittels eines Druckgasspeichers 170 und eines Druck-Ventils 166 eingestellt. Bevorzugt steuert die Steuereinheit 180 sowohl die erste Pumpe 100 als auch das Druck-Ventil 166 und ist dazu mit der Flüssigkeits-Druckerfassungsvorrichtung 64 verbunden.

Durch den Flüssigkeitskreislauf 130 kann in einfacher Weise Flüssigkeit unter dem richtigen Druck aus dem Flüssigkeitsdruckspeicher 150 entnommen und auf die Fluidseiten 91, 92, 93 der Kolbenspeicher 71, 72, 73 geleitet werden oder aus den Fluidseiten 91, 92, 93 der Kolbenspeicher 71, 72, 73 zurück in den Flüssigkeitsspeicher 140 gebracht werden.

Der Flüssigkeitsdruckspeicher 150 ist über eine erste erste Verbindung, welche ein erstes erstes Ventil 161 aufweist, mit der ersten Fluidseite 91 des ersten Kolbenspeichers 71 verbunden. Das erste erste Ventil 161 kann durch die Steuereinheit 180 geöffnet und geschlossen und so der Regelgasdruck im ersten Domdruckminderer 21 erhöht und somit der Wasserstoffdruck am ersten Gasauslass 51 erhöht werden. Der Flüssigkeitsspeicher 140 ist über eine zweite erste Verbindung, welche ein zweites erstes Ventil 162 aufweist, mit der ersten Fluidseite 91 des ersten Kolbenspeichers 71 verbunden. Das zweite erste Ventil 162 kann durch die Steuereinheit 180 geöffnet und geschlossen und so der Regelgasdruck im ersten Domdruckminderer 21 verringert und somit der Wasserstoffdruck am ersten Gasauslass 51 verringert werden.

Der Flüssigkeitsdruckspeicher 150 ist über eine erste zweite Verbindung, welche ein erstes zweites Ventil 163 aufweist, mit der zweiten Fluidseite 92 des zweiten Kolbenspeichers 72 verbunden. Das erste zweite Ventil 163 kann durch die Steuereinheit 180 geöffnet und geschlossen und so der Regelgasdruck im zweiten Domdruckminderer 22 erhöht und somit der Sauerstoffdruck am zweiten Gasauslass 52 erhöht werden. Der Flüssigkeitsspeicher 140 ist über eine zweite zweite Verbindung, welche ein zweites zweites Ventil 164 aufweist, mit der zweiten Fluidseite 92 des zweiten Kolbenspeichers 72 verbunden. Das zweite zweite Ventil 164 kann durch die Steuereinheit 180 geöffnet und geschlossen und so der Regelgasdruck im zweiten Domdruckminderer 22 verringert und somit der Sauerstoffdruck am zweiten Gasauslass 52 verringert werden.

Der Flüssigkeitsdruckspeicher 150 ist über eine erste dritte Verbindung, welche ein erstes drittes Ventil 165 aufweist, mit der dritten Fluidseite 93 des dritten Kolbenspeichers 73 verbunden. Das erste dritte Ventil 165 kann durch die Steuereinheit 180 geöffnet und geschlossen und so der Regelgasdruck im dritten Domdruckminderer 23 erhöht und somit der Stickstoffdruck am dritten Gasauslass 53 erhöht werden. Der Flüssigkeitsspeicher 140 ist über eine zweite dritte Verbindung, welche ein zweites drittes Ventil 166 aufweist, mit der dritten Fluidseite 93 des dritten Kolbenspeichers 73 verbunden. Das zweite dritte Ventil 166 kann durch die Steuereinheit 180 geöffnet und geschlossen und so der Regelgasdruck im dritten Domdruckminderer 23 verringert und somit der Stickstoffdruck am dritten Gasauslass 53 verringert werden.

### Bezugszeichen

- 10: Druckregelungsvorrichtung
- 21: erster Domdruckminderer
- 22: zweiter Domdruckminderer
- 23: dritte Domdruckminderer
- 31: erste Regelgasöffnung
- 32: zweite Regelgasöffnung
- 33: dritte Regelgasöffnung
- 41: erster Gaseinlass
- 42: zweiter Gaseinlass
- 43: dritter Gaseinlass
- 51: erster Gasauslass
- 52: zweiter Gasauslass
- 53: dritter Gasauslass
- 61: erste Druckerfassungsvorrichtung
- 62: zweite Druckerfassungsvorrichtung
- 63: dritte Druckerfassungsvorrichtung
- 64: Flüssigkeits-Druckerfassungsvorrichtung
- 71: erster Kolbenspeicher
- 72: zweiter Kolbenspeicher
- 73: dritter Kolbenspeicher
- 81: erste Gasseite
- 82: zweite Gasseite
- 83: dritte Gasseite
- 91: erste Fluidseite
- 92: zweite Fluidseite
- 93: dritte Fluidseite
- 100: erste Pumpe
- 111: erste Kolbenpositionserfassungsvorrichtung
- 112: zweite Kolbenpositionserfassungsvorrichtung
- 113: dritte Kolbenpositionserfassungsvorrichtung
- 121: erster Kolben
- 122: zweiter Kolben
- 123: dritter Kolben
- 130: Flüssigkeitskreislauf
- 140: Flüssigkeitsspeicher
- 150: Flüssigkeitsdruckspeicher
- 161: erstes erstes Ventil
- 162: zweites erstes Ventil
- 163: erstes zweites Ventil
- 164: zweites zweites Ventil
- 165: erstes drittes Ventil
- 166: zweites drittes Ventil
- 166: Druck-Ventil
- 170: Druckgasspeicher
- 180: Steuereinheit

## Patentansprüche

1. Druckregelungsvorrichtung (10), wobei die Druckregelungsvorrichtung (10) einen ersten Domdruckminderer (21) aufweist, wobei der erste Domdruckminderer (21) eine erste Regelgasöffnung (31), einen ersten Gaseinlass (41) und einen ersten Gasauslass (51) aufweist, wobei der erste Gasauslass (51) mit einer ersten Druckerfassungsvorrichtung (61) verbunden ist, **dadurch gekennzeichnet, dass** die Druckregelungsvorrichtung (10) einen ersten Kolbenspeicher (71) aufweist, wobei der erste Kolbenspeicher (71) eine erste Gasseite (81) und eine erste Fluidseite (91) aufweist, wobei die erste Gasseite (81) des ersten Kolbenspeichers (71) gasführend mit der ersten Regelgasöffnung (31) des ersten Domdruckminderers (21) verbunden ist.

2. Druckregelungsvorrichtung (10) nach Anspruch 1, **dadurch gekennzeichnet, dass** die Druckregelungsvorrichtung (10) eine Steuereinheit (180) aufweist, wobei die Steuereinheit (180) mit der ersten Druckerfassungsvorrichtung (61) zur Weiterleitung des erfassten Drucks verbunden ist.

3. Druckregelungsvorrichtung (10) nach einem der vorstehenden Ansprüche, **dadurch gekennzeichnet, dass** die erste Fluidseite (91) des ersten Kolbenspeichers (71) mit einer ersten Pumpe (100) verbunden ist.

4. Druckregelungsvorrichtung (10) nach einem der vorstehenden Ansprüche, **dadurch gekennzeichnet, dass** die erste Fluidseite (91) des ersten Kolbenspeichers (71) flüssigkeitsgefüllt ist.

5. Druckregelungsvorrichtung (10) nach einem der vorstehenden Ansprüche, **dadurch gekennzeichnet, dass** der erste Kolbenspeicher (71) eine erste Kolbenpositionserfassungsvorrichtung (111) aufweist, wobei die erste Kolbenpositionserfassungsvorrichtung (111) zur Erfassung der Position des ersten Kolbens (121) im ersten Kolbenspeichers (71) ausgebildet ist.

6. Druckregelungsvorrichtung (10) nach Anspruch 5, **dadurch gekennzeichnet, dass** die erste Kolbenpositionserfassungsvorrichtung (111) als Laufzeitmessung auf der ersten Gasseite (81) ausgebildet ist.

7. Druckregelungsvorrichtung (10) nach Anspruch 3 oder einen auf Anspruch 3 rückbezogenen Anspruch **dadurch gekennzeichnet, dass** die erste Fluidseite (91) des ersten Kolbenspeichers (71) mit einem Flüssigkeitskreislauf (130) verbunden ist, wobei der Flüssigkeitskreislauf (130) einen Flüssigkeitsspeicher (140), die erste Pumpe (100) und einen Flüssigkeitsdruckspeicher (150) aufweist, wobei die erste Pumpe (100) zur Förderung von Flüssigkeit aus dem Flüssigkeitsspeicher (140) in den Flüssigkeitsdruckspeicher (150) angeordnet ist, wobei der Flüssigkeitsdruckspeicher (150) über eine erste Verbindung mit der ersten Fluidseite (91) des ersten Kolbenspeichers (71) verbunden ist, wobei die ersteerste Verbindung ein erstes Ventil (161) aufweist, wobei die erste Fluidseite (91) des ersten Kolbenspeichers (71) über eine zweite Verbindung mit dem Flüssigkeitsspeicher (140) verbunden ist, wobei die zweite Verbindung ein zweites Ventil (162) aufweist.

8. Druckregelungsvorrichtung (10) nach Anspruch 7, **dadurch gekennzeichnet, dass** der Flüssigkeitsdruckspeicher (150) mit einem Druckgasspeicher (170) verbunden ist.

9. Druckregelungsvorrichtung (10) nach einem der Ansprüche 7 bis 8 **dadurch gekennzeichnet, dass** der Innendurchmesser der ersten Verbindung um wenigstens Faktor 10, bevorzugt um wenigstens Faktor 100, kleiner ist als der Innendurchmesser des ersten Kolbenspeichers (71).

10. Druckregelungsvorrichtung (10) nach einem der Ansprüche 7 bis 9 **dadurch gekennzeichnet, dass** der Flüssigkeitsdruckspeicher (150) mit einer Flüssigkeits-Druckerfassungsvorrichtung (64) verbunden ist.

11. Druckregelungsvorrichtung (10) nach einem der vorstehenden Ansprüche, **dadurch gekennzeichnet, dass** die Druckregelungsvorrichtung (10) einen zweiten Domdruckminderer (22) aufweist, wobei der zweite Domdruckminderer (22) eine zweite Regelgasöffnung (32), einen zweiten Gaseinlass (42) und einen zweiten Gasauslass (52) aufweist, wobei der zweite Gasauslass (52) mit einer zweiten Druckerfassungsvorrichtung (62) verbunden ist, wobei die Druckregelungsvorrichtung (10) einen zweiten Kolbenspeicher (72) aufweist, wobei der zweite Kolbenspeicher (72) eine zweite Gasseite (82) und eine zweite Fluidseite (92) aufweist, wobei die zweite Gasseite (82) des zweiten Kolbenspeichers (72) gasführend mit der zweiten Regelgasöffnung (32) des zweiten Domdruckminderers (22) verbunden ist.

12. Druckregelungsvorrichtung (10) nach einem der Ansprüche 7 bis 10 in Verbindung mit Anspruch 11, **dadurch gekennzeichnet, dass** der Flüssigkeitsdruckspeicher (150) über eine dritte Verbindung mit der zweiten Fluidseite (92) des zweiten Kolbenspeichers (72) verbunden ist, wobei die dritte Verbindung ein drittes Ventil (163) aufweist, wobei die zweite Fluidseite (92) des zweiten Kolbenspeichers (72) über eine vierte Verbindung mit dem Flüssigkeitsspeicher (140) verbunden ist, wobei die vierte Verbindung ein viertes Ventil (164) aufweist.

13. Druckregelungsvorrichtung (10) nach einem der Ansprüche 11 bis 12 **dadurch gekennzeichnet, dass** die Druckregelungsvorrichtung (10) einen dritten Domdruckminderer (23) aufweist, wobei der dritte Domdruckminderer (23) eine dritte Regelgasöffnung (33), einen dritten Gaseinlass (43) und einen dritten Gasauslass (53) aufweist, wobei der dritte Gasauslass (53) mit einer dritten Druckerfassungsvorrichtung (63) verbunden ist, wobei die Druckregelungsvorrichtung (10) einen dritten Kolbenspeicher (73) aufweist, wobei der dritte Kolbenspeicher (73) eine dritte Gasseite (83) und eine dritte Fluidseite (93) aufweist, wobei die dritte Gasseite (83) des dritten Kolbenspeichers (73) gasführend mit der dritten Regelgasöffnung (33) des dritten Domdruckminderers (23) verbunden ist.

14. Druckregelungsvorrichtung (10) nach Anspruch 12 in Verbindung mit Anspruch 13, **dadurch gekennzeichnet, dass** der Flüssigkeitsdruckspeicher (150) über eine fünfte Verbindung mit der dritten Fluidseite (93) des dritten Kolbenspeichers (73) verbunden ist, wobei die fünfte Verbindung ein fünftes Ventil (165) aufweist, wobei die dritte Fluidseite (93) des dritten Kolbenspeichers (73) über eine sechste Verbindung mit dem Flüssigkeitsspeicher (140) verbunden ist, wobei die sechste Verbindung ein sechstes Ventil (166) aufweist.

15. Druckregelungsvorrichtung (10) nach einem der Ansprüche 7 bis 14, **dadurch gekennzeichnet, dass** die Ventile (161, 162, 163, 164, 165, 166) Magnetventile sind.

16. Druckregelungsvorrichtung (10) nach Anspruch 2 oder einen auf Anspruch 2 rückbezogenen Anspruch **dadurch gekennzeichnet, dass** die Steuereinheit (180) mit jeder Druckerfassungsvorrichtung (61, 62, 63, 64) und jedem Ventil (161, 162, 163, 164, 165, 166) verbunden ist.

17. Druckregelungsvorrichtung (10) nach Anspruch 16 in Verbindung mit Anspruch 3, **dadurch gekennzeichnet, dass** die Steuereinheit (180) mit der ersten Pumpe (100) verbunden ist.

18. Unterseeboot mit einer Druckregelungsvorrichtung (10) nach einem der vorstehenden Ansprüche.

19. Unterseeboot nach Anspruch 18, **dadurch gekennzeichnet, dass** das Unterseeboot eine Brennstoffzellenvorrichtung aufweist, wobei der erste Gasauslass (51) mit der Brennstoffzellenvorrichtung verbunden ist.

20. Unterseeboot nach Anspruch 19, **dadurch gekennzeichnet, dass** das Unterseeboot ein Reaktionswassertank für das in der Brennstoffzellenvorrichtung erzeugte Wasser aufweist, wobei der Reaktionswassertank den Flüssigkeitsspeicher (140) bildet.

21. Unterseeboot nach einem der Ansprüche 18 bis 20, **dadurch gekennzeichnet, dass** das Unterseeboot ein Kühlwassersystem aufweist, wobei das Kühlwassersystem einen Druckausgleichsbehälter aufweist, wobei die Druckregelungsvorrichtung (10) einen vierten Kolbenspeicher aufweist, wobei der vierte Kolbenspeicher eine vierte Gasseite und eine vierte Fluidseite aufweist, wobei die vierte Gasseite des vierten Kolbenspeichers gasführend mit dem Druckausgleichsbehälter verbunden ist.

## Claims

1. A pressure control device (10), the pressure control device (10) comprising a first dome pressure reducer (21), the first dome pressure reducer (21) comprising a first control gas port (31), a first gas inlet (41) and a first gas outlet (51), the first gas outlet (51) being connected to a first pressure sensing device (61), **characterized in that** the pressure control device (10) has a first piston accumulator (71), the first piston accumulator (71) having a first gas side (81) and a first fluid side (91), the first gas side (81) of the first piston accumulator (71) being connected in a gas-conducting manner to the first control gas opening (31) of the first dome pressure reducer (21).

2. Pressure control device (10) according to claim 1, **characterized in that** the pressure control device (10) has a control unit (180), the control unit (180) being connected to the first pressure detection device (61) for forwarding the detected pressure.

3. Pressure regulating device (10) according to one of the preceding claims, **characterized in that** the first fluid side (91) of the first piston accumulator (71) is connected to a first pump (100).

4. Pressure regulating device (10) according to one of the preceding claims, **characterized in that** the first fluid side (91) of the first piston accumulator (71) is filled with liquid.

5. Pressure control device (10) according to one of the preceding claims, **characterized in that** the first piston accumulator (71) comprises a first piston position detecting device (111), wherein the first piston position detecting device (111) is designed to detect the position of the first piston (121) in the first piston accumulator (71).

6. Pressure control device (10) according to claim 5, **characterized in that** the first piston position detection device (111) is designed as a transit time measurement on the first gas side (81).

7. Pressure regulating device (10) according to claim 3 or a claim referring back to claim 3, **characterized in that** the first fluid side (91) of the first piston accumulator (71) is connected to a fluid circuit (130), wherein the fluid circuit (130) comprises a fluid reservoir (140), the first pump (100) and a fluid pressure accumulator (150), wherein the first pump (100) is arranged to deliver fluid from the fluid reservoir (140) into the fluid pressure accumulator (150), wherein the liquid pressure accumulator (150) is connected to the first fluid side (91) of the first piston accumulator (71) via a first connection, wherein the first connection comprises a first valve (161), wherein the first fluid side (91) of the first piston accumulator (71) is connected to the liquid accumulator (140) via a second connection, wherein the second connection comprises a second valve (162).

8. Pressure regulating device (10) according to claim 7, **characterized in that** the liquid pressure accumulator (150) is connected to a compressed gas accumulator (170).

9. Pressure regulating device (10) according to one of claims 7 to 8, **characterized in that** the inner diameter of the first connection is smaller than the inner diameter of the first piston accumulator (71) by at least a factor of 10, preferably by at least a factor of 100.

10. The pressure control device (10) according to any one of claims 7 to 9, **characterized in that** the liquid pressure accumulator (150) is connected to a liquid pressure sensing device (64).

11. Pressure control device (10) according to one of the preceding claims, **characterized in that** the pressure control device (10) comprises a second dome pressure reducer (22), wherein the second dome pressure reducer (22) comprises a second control gas opening (32), a second gas inlet (42) and a second gas outlet (52), wherein the second gas outlet (52) is connected to a second pressure sensing device (62), wherein the pressure control device (10) has a second piston accumulator (72), wherein the second piston accumulator (72) has a second gas side (82) and a second fluid side (92), wherein the second gas side (82) of the second piston accumulator (72) is connected in a gas-conducting manner to the second control gas opening (32) of the second dome pressure reducer (22).

12. The pressure control device (10) according to any one of claims 7 to 10 in conjunction with claim 11, **characterized in that** the liquid pressure accumulator (150) is connected to the second fluid side (92) of the second piston accumulator (72) via a third connection, the third connection comprising a third valve (163), wherein the second fluid side (92) of the second piston accumulator (72) is connected to the liquid accumulator (140) via a fourth connection, the fourth connection comprising a fourth valve (164).

13. The pressure control device (10) according to any one of claims 11 to 12, **characterized in that** the pressure control device (10) comprises a third dome pressure reducer (23), wherein the third dome pressure reducer (23) comprises a third control gas port (33), a third gas inlet (43) and a third gas outlet (53), wherein the third gas outlet (53) is connected to a third pressure sensing device (63), wherein the pressure control device (10) has a third piston accumulator (73), wherein the third piston accumulator (73) has a third gas side (83) and a third fluid side (93), wherein the third gas side (83) of the third piston accumulator (73) is connected in a gas-conducting manner to the third control gas opening (33) of the third dome pressure reducer (23).

14. The pressure control device (10) according to claim 12 in conjunction with claim 13, **characterized in that** the liquid pressure accumulator (150) is connected to the third fluid side (93) of the third piston accumulator (73) via a fifth connection, the fifth connection comprising a fifth valve (165), wherein the third fluid side (93) of the third piston accumulator (73) is connected to the liquid accumulator (140) via a sixth connection, the sixth connection comprising a sixth valve (166).

15. Pressure regulating device (10) according to any one of claims 7 to 14, **characterized in that** the valves (161, 162, 163, 164, 165, 166) are solenoid valves.

16. Pressure control device (10) according to claim 2 or claim referring back to claim 2, **characterized in that** the control unit (180) is connected to each pressure sensing device (61, 62, 63, 64) and each valve (161, 162, 163, 164, 165, 166).

17. Pressure control device (10) according to claim 16 in conjunction with claim 3, **characterized in that** the control unit (180) is connected to the first pump (100).

18. A submarine comprising a pressure regulating device (10) according to any one of the preceding claims.

19. The submarine according to claim 18, **characterized in that** the submarine comprises a fuel cell device, wherein the first gas outlet (51) is connected to the fuel cell device.

20. The submarine according to claim 19, **characterized in that** the submarine comprises a reaction water tank for the water produced in the fuel cell device, wherein the reaction water tank forms the liquid storage (140).

21. Submarine according to one of claims 18 to 20, **characterized in that** the submarine has a cooling water system, wherein the cooling water system has a pressure compensation tank, wherein the pressure control device (10) has a fourth piston accumulator, wherein the fourth piston accumulator has a fourth gas side and a fourth fluid side, wherein the fourth gas side of the fourth piston accumulator is connected to the pressure compensation tank in a gas-carrying manner.

## Revendications

1. Dispositif de régulation de pression (10), le dispositif de régulation de pression (10) comprenant un premier détendeur à dôme (21), le premier détendeur à dôme (21) comprenant un premier orifice de gaz de régulation (31), une première entrée de gaz (41) et une première sortie de gaz (51), la première sortie de gaz (51) étant reliée à un premier dispositif de détection de pression (61), **caractérisé en ce que** le dispositif de régulation de pression (10) comporte un premier accumulateur à piston (71), le premier accumulateur à piston (71) comportant un premier côté gaz (81) et un premier côté fluide (91), le premier côté gaz (81) du premier accumulateur à piston (71) étant relié, de manière à conduire le gaz, à la première ouverture de gaz de régulation (31) du premier détendeur à dôme (21).

2. Dispositif de régulation de pression (10) selon la revendication 1, **caractérisé en ce que** le dispositif de régulation de pression (10) comprend une unité de commande (180), l'unité de commande (180) étant reliée au premier dispositif de détection de pression (61) pour transmettre la pression détectée.

3. Dispositif de régulation de pression (10) selon l'une des revendications précédentes, **caractérisé en ce que** le premier côté fluide (91) du premier accumulateur à piston (71) est relié à une première pompe (100).

4. Dispositif de régulation de pression (10) selon l'une des revendications précédentes, **caractérisé en ce que** le premier côté fluide (91) du premier accumulateur à piston (71) est rempli de liquide.

5. Dispositif de régulation de pression (10) selon l'une quelconque des revendications précédentes, **caractérisé en ce que** le premier accumulateur de piston (71) comprend un premier dispositif de détection de position de piston (111), le premier dispositif de détection de position de piston (111) étant configuré pour détecter la position du premier piston (121) dans le premier accumulateur de piston (71).

6. Dispositif de régulation de pression (10) selon la revendication 5, **caractérisé en ce que** le premier dispositif de détection de la position du piston (111) est conçu comme une mesure du temps de transit sur le premier côté du gaz (81).

7. Dispositif de régulation de pression (10) selon la revendication 3 ou une revendication rétroactive à la revendication 3, **caractérisé en ce que** le premier côté fluide (91) du premier accumulateur à piston (71) est relié à un circuit de liquide (130), le circuit de liquide (130) comprenant un réservoir de liquide (140), la première pompe (100) et un accumulateur de pression de liquide (150), la première pompe (100) étant agencée pour refouler du liquide du réservoir de liquide (140) dans l'accumulateur de pression de liquide (150), l'accumulateur de pression de liquide (150) étant relié par une première liaison au premier côté fluide (91) du premier accumulateur à piston (71), la première liaison présentant une première soupape (161), le premier côté fluide (91) du premier accumulateur à piston (71) étant relié par une deuxième liaison à l'accumulateur de liquide (140), la deuxième liaison présentant une deuxième soupape (162).

8. Dispositif de régulation de pression (10) selon la revendication 7, **caractérisé en ce que** l'accumulateur de pression de liquide (150) est relié à un accumulateur de gaz comprimé (170).

9. Dispositif de régulation de pression (10) selon l'une des revendications 7 à 8, **caractérisé en ce que** le diamètre intérieur du premier raccord est inférieur d'au moins un facteur 10, de préférence d'au moins un facteur 100, au diamètre intérieur du premier accumulateur à piston (71).

10. Dispositif de régulation de pression (10) selon l'une des revendications 7 à 9, **caractérisé en ce que** l'accumulateur de pression de liquide (150) est relié à un dispositif de détection de pression de liquide (64).

11. Dispositif de régulation de pression (10) selon l'une quelconque des revendications précédentes, **caractérisé en ce que** le dispositif de régulation de pression (10) comprend un deuxième détendeur à dôme (22), le deuxième détendeur à dôme (22) comprenant un deuxième orifice de gaz de régulation (32), une deuxième entrée de gaz (42) et une deuxième sortie de gaz (52), la deuxième sortie de gaz (52) étant reliée à un deuxième dispositif de détection de pression (62), le dispositif de régulation de pression (10) présentant un deuxième accumulateur à piston (72), le deuxième accumulateur à piston (72) présentant un deuxième côté gaz (82) et un deuxième côté fluide (92), le deuxième côté gaz (82) du deuxième accumulateur à piston (72) étant relié de manière à conduire le gaz à la deuxième ouverture de gaz de régulation (32) du deuxième détendeur à dôme (22).

12. Dispositif de régulation de pression (10) selon l'une quelconque des revendications 7 à 10 en combinaison avec la revendication 11, **caractérisé en ce que** l'accumulateur de pression de liquide (150) est relié par une troisième liaison au deuxième côté fluide (92) du deuxième accumulateur à piston (72), la troisième liaison comprenant une troisième vanne (163), le deuxième côté fluide (92) du deuxième accumulateur à piston (72) étant relié par une quatrième liaison à l'accumulateur de liquide (140), la quatrième liaison comprenant une quatrième vanne (164).

13. Dispositif de régulation de pression (10) selon l'une des revendications 11 à 12, **caractérisé en ce que** le dispositif de régulation de pression (10) comprend un troisième détendeur à dôme (23), le troisième détendeur à dôme (23) comprenant un troisième orifice de gaz de régulation (33), une troisième entrée de gaz (43) et une troisième sortie de gaz (53), la troisième sortie de gaz (53) étant reliée à un troisième dispositif de détection de pression (63), dans lequel le dispositif de régulation de pression (10) présente un troisième accumulateur à piston (73), le troisième accumulateur à piston (73) présentant un troisième côté gaz (83) et un troisième côté fluide (93), le troisième côté gaz (83) du troisième accumulateur à piston (73) étant relié, par guidage du gaz, à la troisième ouverture de gaz de régulation (33) du troisième détendeur à dôme (23).

14. Dispositif de régulation de pression (10) selon la revendication 12 en combinaison avec la revendication 13, **caractérisé en ce que** l'accumulateur de pression de liquide (150) est relié au troisième côté fluide (93) du troisième accumulateur à piston (73) par une cinquième connexion, la cinquième connexion comprenant une cinquième soupape (165), le troisième côté fluide (93) du troisième accumulateur à piston (73) étant relié à l'accumulateur de liquide (140) par une sixième connexion , la sixième connexion comprenant une sixième soupape (166).

15. Dispositif de régulation de pression (10) selon l'une des revendications 7 à 14, **caractérisé en ce que** les vannes (161, 162, 163, 164, 165, 166) sont des électrovannes.

16. Dispositif de régulation de pression (10) selon la revendication 2 ou la revendication rétroactive à la revendication 2, **caractérisé en ce que** l'unité de commande (180) est connectée à chaque dispositif de détection de pression (61, 62, 63, 64) et à chaque vanne (161, 162, 163, 164, 165, 166).

17. Dispositif de régulation de pression (10) selon la revendication 16 en combinaison avec la revendication 3, **caractérisé en ce que** l'unité de commande (180) est reliée à la première pompe (100).

18. Sous-marin équipé d'un dispositif de régulation de pression (10) selon l'une des revendications précédentes.

19. Sous-marin selon la revendication 18, **caractérisé en ce que** le sous-marin comprend un dispositif de pile à combustible, la première sortie de gaz (51) étant reliée au dispositif de pile à combustible.

20. Sous-marin selon la revendication 19, **caractérisé en ce que** le sous-marin comprend un réservoir d'eau de réaction pour l'eau générée dans le dispositif de pile à combustible, le réservoir d'eau de réaction formant le réservoir de liquide (140).

21. Sous-marin selon l'une quelconque des revendications 18 à 20, **caractérisé en ce que** le sous-marin comprend un système d'eau de refroidissement, le système d'eau de refroidissement comprenant un réservoir d'égalisation de pression, le dispositif de régulation de pression (10) comprenant un quatrième accumulateur à piston, le quatrième accumulateur à piston comprenant un quatrième côté gaz et un quatrième côté fluide, le quatrième côté gaz du quatrième accumulateur à piston étant relié au réservoir d'égalisation de pression de manière à conduire le gaz.
